# EUROPEAN PATENT SPECIFICATION

(11) **EP 1 683 577 B1**
(45) Date of publication and mention of the grant of the patent: **16.09.2009**
(21) Application number: 06001127.7
(22) Date of filing: 19.01.2006
(51) Int. Cl.: B01L 3/00, B01D 29/00, B01D 29/52, F16J 15/32, G01N 35/10, B01L 3/02

(54) **Pressurized air supplying mechanism, pressurizing device and extracting apparatus**
Druckluftzufuhrmechanismus, Druckbeaufschlagungseinrichtung und Extraktionsvorrichtung
Mécanisme automatique de l'alimentation d'air, dispositif de pressurisation et appareil d'extraction.

(30) Priority: 20.01.2005 JP 2005012989
(43) Date of publication of application: 26.07.2006
(73) Proprietor: FUJIFILM Corporation, Minato-ku Tokyo (JP)
(72) Inventor: Torisawa, Nobuyuki, Minami-ashigara-shi Kanagawa (JP)
(74) Representative: Klunker . Schmitt-Nilson . Hirsch

(56) References cited:
- JP-A- 2005 110 669
- US-A- 3 370 508
- US-A- 4 451 365
- US-A- 4 948 564
- US-A- 5 578 157
- US-A1- 2001 019 845
- US-B1- 6 171 555

## Description

### BACKGROUND OF THE INVENTION

### 1. Field of the Invention

The present invention relates to a pressurized air supplying mechanism according to the preamble of claim 1 for supplying pressurized air to a cartridge having a filter which adsorbs a specific substance in a sample liquid, and an extracting apparatus according to the preamble of claim 12.

### 2. Description Related to the Prior Art

A conventional extracting apparatus, for instance, a nucleic acid extracting apparatus often uses magnetic beads, filters or the like. The extracting apparatus with filters is able to extract more, highly refined, nucleic acids than the extracting apparatus with magnetic beads.

In the extracting apparatus using with filters, a sample liquid including the nucleic acids is passed through the filter and the nucleic acids are adsorbed onto the filter as a solid phase. Thereafter, a recovery liquid is poured to pass through the filter to dissolve and separate the nucleic acids in the solid phase from the filter. The nucleic acids are recovered along with the recovery liquid. The extracting apparatus with the filters typically uses one of the centrifugation method, depressurization method or pressurization method for the filtration.

In the extracting apparatus using the centrifugation method, a centrifugal machine is used to let the sample liquid pass through the filter (for instance, Japanese Patent Laid-Open Publication No. 2003-144150). However, with this configuration, the extracting apparatus is upsized and the operation becomes complicated. Further, it is difficult to fully automate the extracting apparatus and a part of the operation has to be done manually.

In the extracting apparatus using the depressurization method, the sample liquid is exposed under reduced pressure so that it passes through the filter (for instance, U.S. Patent No. 5,824,224). However, during the depressurization, only 1 atmospheric pressure can be applied and the extracting process requires quite a long time.

In the extracting apparatus using the pressurization method, the sample liquid passes through the filter under increased pressure (for instance, Japanese Patent Laid-Open Publication No. 2003-128691 and Japanese Patent Laid-Open Publication No. 2005-110669). In this case, the extracting process can be completed in a short time since any intended amount of air pressure can be applied. As the filter, in the above references, a porous membrane filter is suggested. The porous membrane filter is extremely thin compared to the conventionally-used glass fiber filter, and achieves high adsorption and easy desorption of the nucleic acids. The extracting apparatus using the porous membrane filter and the pressurization method enables to extract many, high purity nucleic acids in a shorter time.

The extracting apparatus disclosed in the Japanese Patent Laid-Open Publication No. 2005-110669 has plural air nozzles for discharging pressurized air, a seal seat disposed at a tip of each air nozzle in an integral form and a pressurizing head which retains the plural air nozzles and the seal seat and moves in the up-and-down directions with respect to extracting cartridges. The extracting cartridges are made of resin, and retained in a cartridge holder. The pressurizing head is moved downward and the air nozzles are pressed against the air inlets in the upper ends of the extracting cartridges through the seal seat such that the pressurized air is supplied to the extracting cartridges. Thereby, each liquid is pressurized and passes through the filter.

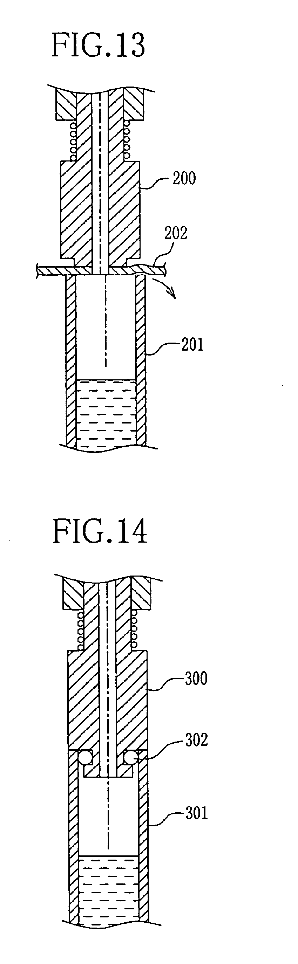

However, as shown in Fig. 13, in the extracting apparatus of the Japanese Patent Laid-Open Publication No. 2005-110669, an air nozzle 200 may be pressed against an extracting cartridge 201 in a state that a center axis of the air nozzle 200 is off to that of the extracting cartridge 201. In this state, a seal seat 202 cannot be uniformly pressed to the upper surface of the extracting cartridge 201 and the pressurized air may leak. Further, when the air nozzle 200 is pressed against the extracting cartridge 201 in the state that their center axes are off to each other, an upper portion of the extracting cartridge 201 may be deformed. As a result, the pressurized air may leak from a gap between the seal seat 202 and the upper surface of the extracting cartridge 201.

To solve the above problem, as shown in Fig. 14, an o-ring 302 can be used, as a sealing member, which is pressed against the inner peripheral surface of the extracting cartridge 301 for sealing. With this method, a certain degree of the displacement of the center axis is corrected and the upper section of the extracting cartridge 301 can be securely sealed. However, since an air nozzle 300 tightly fits in the extracting cartridge 301 due to the elasticity of the o-ring 302, it becomes hard to separate the air nozzle 300 from the extracting cartridge 301 when the air nozzle 300 is retracted upward. Further, a portion of the air nozzle inserted into the extracting cartridge 301 is increased so that the liquid in the cartridge may adhere to the inserted portion. Accordingly, the contamination may occur.

In accordance with the preamble of claim 1 and claim 12 respectively, EP 0 529 504 A2 discloses a pressurized air supplying mechanism and an extracting apparatus for adsorbing a specific substance. Similar mechanisms are known from US 6,126,904 and EP 0 558 050 A1.

### SUMMARY OF THE INVENTION

An object of the present invention is to provide a pressurized air supplying mechanism, and an extracting apparatus which can securely seal an inlet of a cartridge.

Another object of the present invention is to provide a pressurized air supplying mechanism and an extracting apparatus for preventing a contamination of an air nozzle when the inlet of the cartridge is sealed.

To achieve the above and other objects, the pressurized air supplying mechanism of the present invention has the features of claim 1.

Preferred embodiments are defined by the dependent claims.

An outer diameter of the regulating section is slightly smaller than an inner diameter of the cartridge so as to fit in an inner peripheral surface of the cartridge. When the outer diameter of the regulating section is *φ*A and the inner diameter of the cartridge is *φ*a, it is preferable to satisfy *φ*a-0.5mm ≤ *φ* A < *φ*a. Further, it is more preferable to satisfy <*φ*a-0.2mm ≤ *φ* A < *φ*a. Chamfering is preferably applied to edges of the regulating section. Further, an inner diameter of the regulating section of the air nozzle may have approximately the same size as an outer diameter of the cartridge so as to fit in the outer peripheral surface of the cartridge. Furthermore, the positioning member of the air nozzle may have a shape which can be fit onto both the inner and the outer peripheral surfaces of the cartridge.

The sealing member is an o-ring. A groove is curved in a diameter direction in the outer peripheral surface of the air nozzle. A width of the groove preferably increases in accordance with a depth of the groove. In particular, at least one of side walls of the groove is preferably inclined in a direction in which the width increases in accordance with the depth. It is also possible to incline both side walls of the groove. A distance between a lower end of the o-ring and a lower end of the regulating section is preferably 0.1mm or more. Further, the distance is preferably from 0.5mm to 1mm.

When plural cartridges are used, a cartridge row is preferably formed by aligning the cartridges in at least one row in a first direction. The air nozzle moving section preferably includes a pressurizing head which retains the plural air nozzles corresponding to the cartridges in the cartridge row, and a pressurizing head moving section for moving the pressurizing head in an up-and-down direction between the pressurizing position and the retracting position.

When the plural cartridges are connected in the row direction, the pressurizing head preferably retains each of the air nozzles in an independently movable manner in the up-and-down direction with the air nozzles biased downward to protrude at least one air nozzle in a position lower than the other air nozzles. The pressurizing head has a head main body for retaining each of the air nozzles independently in a movable manner in an up-and-down direction, a biasing member for biasing each of the air nozzles downward with respect to the head main body, a locking member for locking the other nozzles in a first position against the biasing force and for locking at least one air nozzle in a second position lower than the first position against the biasing force.

The pressurizing device of the present invention comprises the pressurized air supplying mechanism, a cartridge holder for retaining the cartridge row in a second direction perpendicular to the first direction, and a moving section for moving the cartridge holder and the pressurizing head relative to the other in the second direction for supplying the pressurized air to each of the cartridge rows. The cartridge holder can be moved to the second direction. The pressurizing head can also be moved to the second direction with respect to the pressurizing head. Thereby, pressurizing processing can be performed to the plurality of cartridges in a short time.

An extracting apparatus of the present invention includes the features of claim 12.

In the pressurized air supplying mechanism of the pesent invention, since the air nozzle has the regulating section for preventing the displacement of the air nozzle in the diameter direction of the cartridge, the air nozzle is accurately positioned and pressed against the cartridge. Accordingly, the inlet of the cartridge is securely sealed.

The outer diameter of the regulating section of the air nozzle is approximately the same as the inner diameter of the cartridge and fits in the inner peripheral surface. Or the inner diameter of the regulating section is approximately the same size as the outer diameter of the cartridge and fits on the outer peripheral surface of the cartridge. Thereby, deformation in an upper portion of the cartridge formed by resin is prevented and the inlet of the cartridge is securely sealed.

The sealing member is an o-ring. The outer peripheral surface of the air nozzle has a groove in the diameter direction for fitting to the o-ring. A width of the groove increases as the depth of the groove increases. A force is exerted inward (toward the bottom of the groove in the diameter direction) in the pressurization and the o-ring never expands outward. Accordingly, the seal failure is prevented.

The pressurizing head constituting the air nozzle moving section retains the air nozzles, each of which is biased downward but movable in the up-and-down directions. And at least one air nozzle protrudes in the position lower than the other air nozzles on the pressurizing head. Accordingly, when the pressurizing head is moved upward after the pressurized air is supplied, the air nozzles are separated from the cartridges except the one that protrudes, and then the this protruding air nozzle is separated from the cartridge. Thereby, each air nozzle can be securely separated from the cartridges connected to each other in the row direction.

According to the pressurizing device of the present invention, the pressurizing processing can be performed to the plurality of the cartridges in a short time. Further, according to the extracting apparatus of the present invention, the extracting processing can be performed to a plurality of samples in a short time.

### BRIEF DESCRIPTION OF THE DRAWINGS

The above objects and advantages of the present invention will become easily understood by one of ordinary skill in the art when the following detailed description would be read in connection with the accompanying drawings.
Figs . 1A to 1G are explanatory views showing operations of nucleic acid extraction process;
Fig. 2 is an explanatory view which outlines an embodiment of a nucleic acid extraction apparatus of the present invention;
Fig. 3 is an external view of an extracting cartridge unit;
Fig. 4 is an exploded perspective view of a cartridge holder, a waste liquid vessel and a recovery vessel;
Fig. 5 is an external perspective view of a pressurizing device whose cover is removed;
Fig. 6 is a block diagram showing an electrical configuration of the pressurizing device shown in Fig.5;
Fig. 7 is a plan view showing a configuration of a head main body;
Fig. 8 is a diagram of an air pressure circuit of the pressurizing device shown in Fig.5;
Figs. 9A and 9B are explanatory views showing an movement of an air nozzle;
Fig. 10 is an external perspective view showing another embodiment of the head main body;
Fig. 11 is a bottom view showing another embodiment of the head main body;
Fig. 12 is a section view showing another embodiment of a nozzle head;
Fig. 13 is a section view showing conventional air nozzle and recovery vessel in the pressurizing operation; and
Fig. 14 is a section view showing a conventional air nozzle with an o-ring and a conventional recovery vessel in the pressurization operation.

### PREFERRED EMBODIMENTS OF THE INVENTION

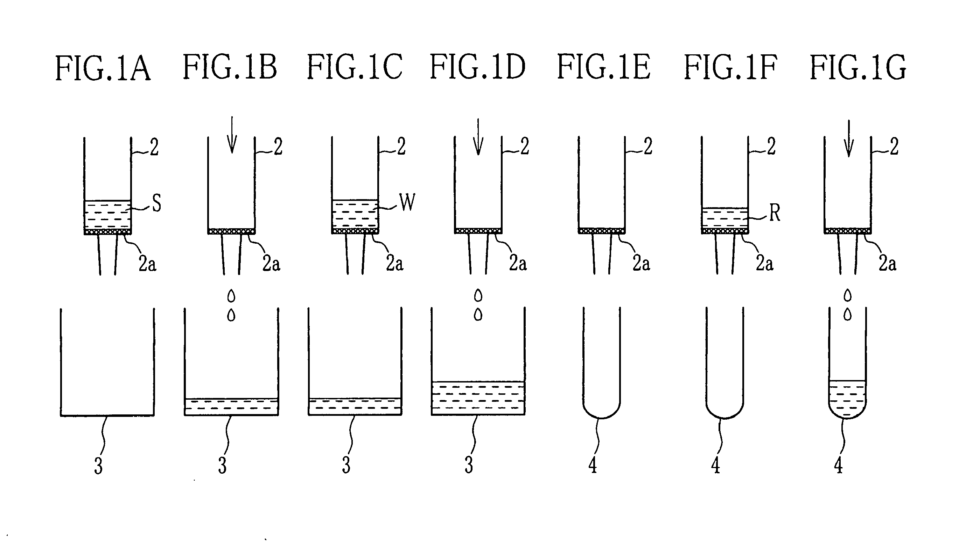

Referring to Figs. 1A to 1G, a nucleic acid extraction processing is explained. First, as shown in Fig.1A, a sample liquid dispensing operation is performed in which a sample liquid S including dissolved nucleic acids is dispensed into an inlet of an extracting cartridge 2. Next, as shown in Fig. 1B, a nucleic acid adsorption operation in which pressurized air is introduced to the extracting cartridge 2 above a waste liquid vessel 3 so that the sample liquid S passes through the filter 2a and the nucleic acids are adsorbed onto the filter 2a. A liquid component passed through the filter 2a is discharged to the waste liquid vessel 3 through an outlet of the extracting cartridge 2.

Thereafter, as shown in Fig. 1C, a washing liquid dispensing operation is performed in which a washing liquid W is dispensed into the extracting cartridge 2. Next, as shown in Fig. 1D, a washing operation is performed in which the pressurized air is introduced to the extracting cartridge 2 to wash off and remove impurities while the nucleic acids are kept in the filter 2a. The washing liquid W passed through the filter 2a is discharged to the waste liquid vessel 3. The washing liquid dispensing operation and the washing operation can be repeated plural times.

Thereafter, as shown in Fig. IE, the waste liquid vessel 3 below the extracting cartridge 2 is replaced with a recovery vessel 4. Then, as shown in Fig. 1F, a recovery liquid dispensing operation is performed in which a recovery liquid R is dispensed into the extracting cartridge 2. Lastly, as shown in Fig. 1G, a nucleic acid recovery operation is performed in which the recovery liquid R including the nucleic acids are discharged to the recovering vessel 4 by introducing the pressurized air to the extracting cartridge 2 for pressurizing the extracting cartridge 2 so that the binding force between the filter 2a and the nucleic acids is reduced to separate the adsorbed nucleic acids from the filter 2a.

The filter 2a is basically a porous filter through which the nucleic acids can be passed. A surface of the filter 2a has a property to adsorb the nucleic acids contained in the sample liquid S by the chemical binding force. The filter 2a keeps the adsorption to the nucleic acids during the washing with the washing liquid W but reduces the adsorption force and separate the nucleic acids when the recovery liquid R is dispensed for recovering the nucleic acids. Such example is described in details in a separation and purification method of the nucleic acids disclosed in U.S. Patent Application Publication No. 2003/0170664 A1. In this document, the filter 2a is formed of, for instance, an organic high polymer having a hydroxyl group on the surface. As the organic high polymer, an acetyl cellulose product with a saponified surface is preferable. As the acetyl cellulose, any of monoacetyl cellulose, diacetyl cellulose and triacetyl cellulose can be used, but the triacetyl cellulose is especially preferable. The surface of the acetyl cellulose is saponified by the saponification processing liquid (for instance, NaOH); however, the structure remains as the acetyl cellulose. An amount of the hydroxyl group (a density) on the surface can be controlled by a degree of surface saponification processing (a surface saponification degree). The adsorption effect to the nucleic acids is increased as the number of the hydroxyl groups are increased. For instance, when the triacetyl cellulose or the like is used, the surface saponification degree is preferably approximately 5% or more. The surface saponification degree is more preferably approximately 10% or more. As the filter 2a, the porous membrane formed of the acetyl cellulose is suitable.

The sample liquid S including the nucleic acids is prepared by applying a pretreatment to a sample including cells or viruses. Pretreatment is a processing in which a water-soluble organic solvent is added to a solution dispersed with the nucleic acids in the liquid by the dissolution processing of the sample. For instance, in the field of medical diagnosis, the samples are solutions prepared from either of a bodily fluid such as whole blood, blood plasma, blood serum, urine, feces, semen, saliva and the like, and (a part of) a plant, (a part of) an animal, or a biological material such as a dissolved product or homogenates of these organisms. A dissolution processing is a treatment to the samples with using an aqueous solution including a reagent which dissolves the cell membrane and nuclear membrane to solubilize the nucleic acids. The reagent is a solution containing, for instance, a guanidine salt, a surface active agent and a protease. For instance, when the sample is the whole blood, red blood corpuscles and various proteins are decomposed and converted to low molecular weight substances in order for preventing nonspecific adsorption and clogging of the filter 2a. In addition, white blood corpuscles and the nuclear membrane are dissolved to solubilize the nucleic acids to be extracted. As the water-soluble organic solvent, ethanol, isopropanol and propanol can be used, among which the ethanol is most preferable. A concentration of the water-soluble organic solvent is preferably 5-90 wt. %, and more preferably 20-60 wt.%. It is preferable to set the concentration of the ethanol as high as possible, without that the agglomerates are not generated.

The washing liquid W has a function to wash off impurities, included in the sample liquid S, which adhere to the filter 2a along with the nucleic acids. The washing liquid W has a function to separate the impurities from the filter 2a without breaking the adsorption of the nucleic acids to the filter 2a. The washing liquid W is formed of the aqueous solution including a base compound and a buffer solution, and a surface active agent if necessary. As the base compound, the aqueous solution including approximately 10-100 wt. % (preferably 20-100 wt.%, more preferably 40-80 wt.%) of methanol, ethanol, isopropanol, N-isopropanol, butanol, acetone or the like is used.

The recovery liquid R is preferable to have a low salt concentration. It is preferable to use a solution which has the salt concentration of 0.5M or less such as, for instance, purified distilled water, TE buffer and the like.

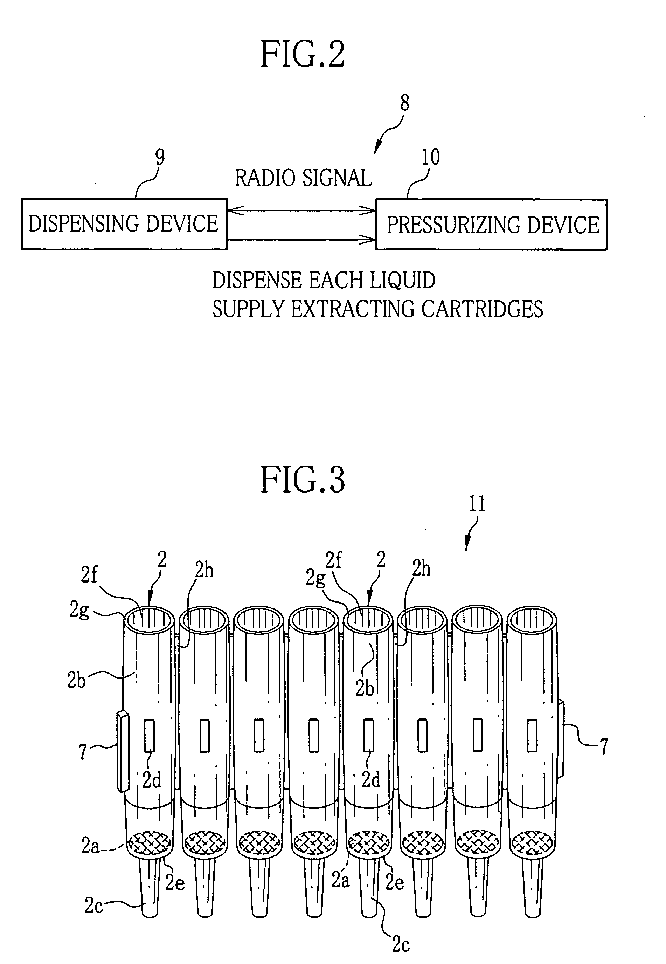

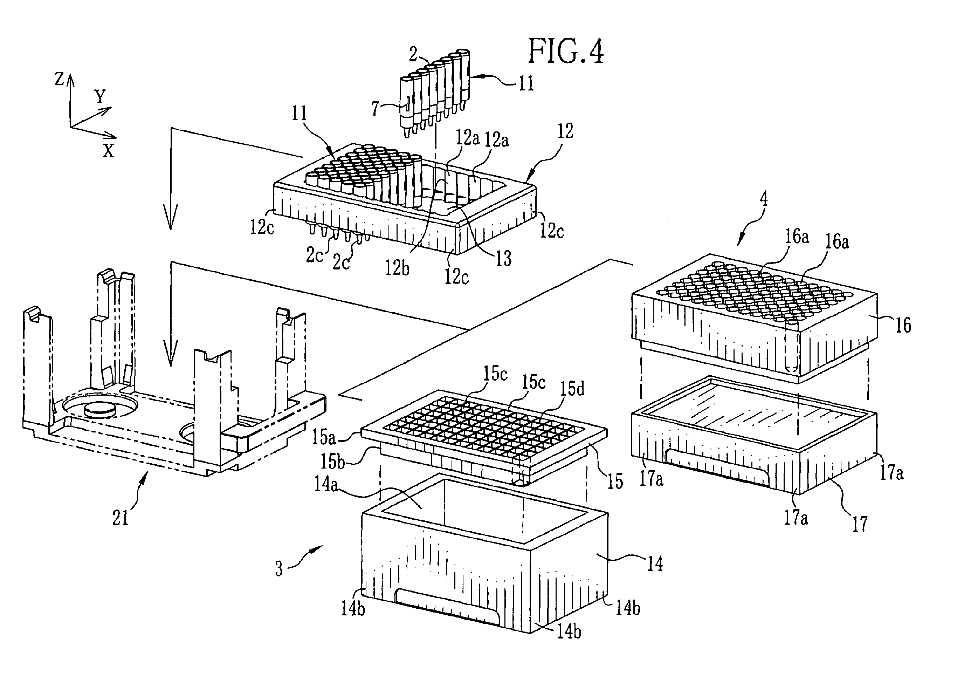

As shown in Fig.2, an exemplary nucleic acid extracting apparatus 8 made according to the present invention is constituted of a dispensing device 9 and a pressurizing device 10. The dispensing device 9 and the pressurizing device 10 perform the extracting processing together while mutually transmitting and receiving the radio signals. In the nucleic extracting apparatus 8, an extracting cartridge unit 11 (see Fig.3), a cartridge holder 12 (see Fig.4), the waste liquid vessel 3 and the recovery vessel 4 are loaded.

As shown in Fig. 3, the extracting cartridge unit 11 is constituted of, for instance, eight extracting cartridges 2. The eight extracting cartridges 2 are arranged in a row and adjacent extracting cartridges 2 are connected by a connector 2h.

The extracting cartridge 2 has the following: a tubular main body 2b, a filter 2a disposed at a bottom portion of the tubular main body 2b, a discharge portion (an outlet) 2c protruded in a shape of a thin nozzle at a center area of the lower end of the tubular main body 2b, positioning projections 2d having the flat exterior surfaces formed on the lateral surface of the tubular main body 2b and a step portion 2e. On an upper end 2g of the tubular main body 2b, an opening (an inlet) 2f is formed. When the plural extracting cartridge units 11 are arranged in plural columns, the positioning projections 2d of the adjacent cartridges contact with each other so that the extracting cartridge units 11 are positioned in a direction perpendicular to the row direction. Further, the two extracting cartridges 2 placed on both ends of the extracting cartridge unit 11 have a side projection 7 respectively.

As shown in Fig. 4, the cartridge holder 12 can hold the plural extracting cartridge units 11 in plural columns. An opening 13 which is a through hole in an up-and-down direction is formed in the cartridge holder 12. The extracting cartridge units 11 are inserted in the opening 13. An inner peripheral surface of the cartridge holder 12 is formed as a guide wall 12a which guides the extracting cartridge unit 11 in the up-and-down direction (a Z-axis direction) while positioning the extracting cartridge unit 11 both in a forward-and-backward direction (an X-axis direction) and a right-and-left direction (a Y-axis direction). Each guide wall 12a has an engaging portion 12b formed to protrude from the guide wall 12a. When the extracting cartridge unit 11 is inserted in the cartridge holder 12, the engaging portion 12b catches the side projection 7 to prevent the extracting cartridge unit 11 from slipping off from the cartridge holder 12. The cartridge holder 12 holds plural extracting cartridge units 11 arranged in columns (12 columns in this embodiment). The extracting cartridges 2 are respectively arranged at constant pitches (9mm in this embodiment) both in the forward-and-backward direction and the right-and-left direction. The cartridge holder 12 in which the plural extracting cartridge units 11 are set is mounted on a holder rack (not shown).

The waste liquid vessel 3 is constituted of a vessel main body 14 and a partition frame 15 fitted in an upper portion of the vessel main body 14. The vessel main body 14 has a rectangular box shape and has a container 14a which holds the waste liquid. Outer peripheries of an upper section 15a and a lower section 15b of the partition frame 15 are approximately the same size as the outer and inner periphery of the vessel main body 14. When the partition frame 15 is attached to the vessel main body 14, the lower section 15b is inserted in the container 14a, and the upper section 15a is mounted on an upper surface of the vessel main body 14. In the partition frame 15, cartridge mount holes 15c which are through-holes in the up-and-down direction with a rectangular section, are formed in a matrix arrangement. The cartridge mount holes 15c are divided by the partition plates 15d. The number of the cartridge mount holes 15c is formed to be equal to that of the extracting cartridges 2 which can be held by the cartridge holder 12. The pitch between the cartridge mount holes 15c corresponds to that between the extracting cartridges 2. The waste liquid vessel 3 is mounted on a waste liquid vessel rack (not shown).

The recovery vessel 4 is constituted of a vessel main body 16 and a support block 17 for supporting the vessel main body 16. In the vessel main body 16, a plurality of recovery tubes 16a with bottom is arranged in the matrix form. Each recovery tube 16a holds the recovery liquid discharged from the extracting cartridges 2. The number of the recovery tubes 16a is equal to that of the extracting cartridges 2 which can be held by the cartridge holder 12. The pitch between the recovery tubes 16a corresponds to that between the extracting cartridges 2. The support block 17 supports the vessel main body 16 at the same level as the waste liquid vessel 3 with the partition frame 15. Thereby, the top surfaces of the waste liquid vessel 3 and the recovery vessel 4 will be level with each other when set in a transport mechanism 21. The recovery vessel 4 is mounted on the recovery vessel rack (not shown).

The dispensing apparatus 9 (see Fig. 2) has a function to perform the above-mentioned pretreatment to the sample to prepare the sample liquid S. Further, the dispensing apparatus 9 includes a dispensing mechanism (not shown) and a handling mechanism (not shown). The dispensing mechanism enables to dispense either of the sample liquid S, the washing liquid 7 or the recovery liquid R at one time to the plural extracting cartridges held by the cartridge holder 12. The handling mechanism has a clamp for grasping the cartridge holder 12, the waste liquid vessel 3 and the recovery vessel 4 and moves the clamp in the three dimensional directions to set the cartridge holder 12 and the like in the transport mechanism 21 of the pressurizing device 10. A means for moving the clamp is constituted of a shifting mechanism for shifting the clamp in the three dimensional direction, an articulated robotic arm and the like.

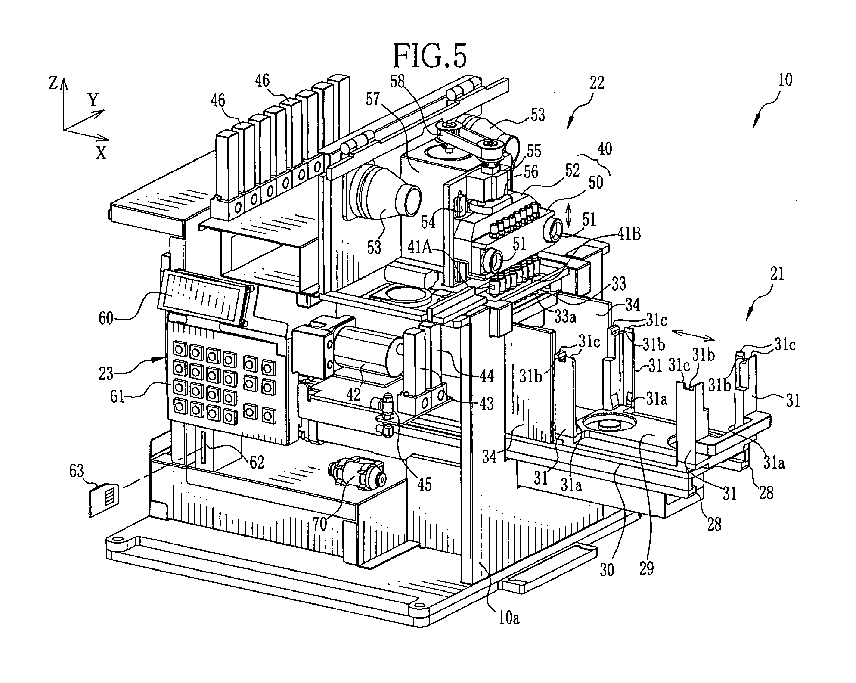

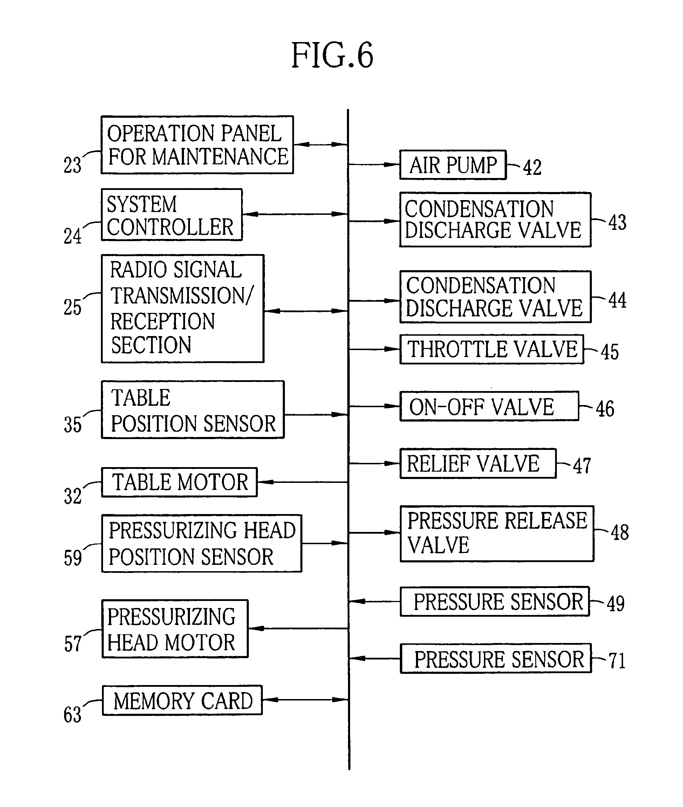

As shown in Figs. 5 and 6, the pressurizing device 10 includes the transport mechanism 21 for moving the extracting cartridges 2, a pressurized air supplying mechanism 22 for supplying the pressurized air to the extracting cartridges 2, a maintenance operation panel 23 and the like. The pressurizing device 10 is controlled by a system controller 24 (see Fig. 6) which will be described later. The system controller 24 controls each section according to signals from a radio signal transmission/reception section 25 (see Fig. 6), maintenance operation panel 23 and the like.

The transport mechanism 21 includes a table 29, a table support plate 30, a table motor 32 (see Fig. 6) and inspection block 33. The table 29 is fixed to the table support plate 30 and has four pillars 31 fixed to project upward on the upper surface thereof. Each pillar 31 has an approximate L shape in horizontal section and is placed to face inward. The table support plate 30 is mounted on a rail 28 extending in the forward-and-backward direction (the X-axis direction). The table 29 is moved along with the table support plate 30 in the forward-and-backward direction when a drive force of the table motor 32 is transferred.

On the table 29, one of the above-mentioned waste liquid vessel 3 or the recovery vessel 4 is selectively placed. On an inner surface of the lower portion of each pillar 31, a positioning guide 31a is protruded. Each positioning guide 31a has a tilted surface. When the waste liquid vessel 3 is mounted on the table 29, lower corners 14b (see Fig. 4) of the waste liquid vessel 3 are guided along the tilted surfaces so that the waste liquid vessel 3 is positioned in the forward-and-backward direction (the X axis direction) and in the right-and-left direction (the Y axis direction). Mounted on the table 29, the waste liquid vessel 3 is positioned in the up-and-down direction (the Z axis direction) . In the same manner, the recovery vessel 4 is set positioned in the forward-and-backward direction, the right-and-left direction and the up-and-down direction.

In an upper portion of each pillar 31, a step 31b is formed. The above-mentioned cartridge holder 12 is mounted on the step 31b. The step 31b has a positioning guide 31c protruded upward. The positioning guide 31c has a tilted surface. When the cartridge holder 12 is set on the table 29, the lower corners 12c (see Fig. 4) of the cartridge holder 12 are guided along the tilted surfaces of the guide 31c so that the cartridge holder 12 is positioned in the forward-and-backward direction (the X axis direction) and in the right-and-left direction (the Y axis direction). The cartridge holder 12 is set positioned in the up-and-down direction (the Z axis direction) as it is mounted on the steps 31b.

When the cartridge holder 12 is mounted on the four pillars 31 in a state that the waste liquid vessel 3 is mounted on the table 29, the discharge section 2c of the extracting cartridge 2 is inserted in an upper portion of the cartridge mount hole 15c of the waste liquid vessel 3. The upper surface of the partition plates 15d of the waste liquid vessel 3 holds the step section 2e of the extracting cartridge 2. Thereby, the extracting cartridge unit 11 is prevented from bending when air nozzles 41A and 41B press the upper end of the extracting cartridge unit 11. Further, when the cartridge holder 12 is mounted on the four pillars 31 in a state that the recovery vessel 4 is mounted on the table 29, the discharge section 2c of the extracting cartridge 2 is inserted in the upper portion of the recovery tube 16a of the recovery vessel 4. In the same manner as the waste liquid vessel 3, the upper surface of the vessel main body 16 of the recovery vessel 3 holds the step section 2e of the extracting cartridge 2.

At the rear of the table 29 on the table support 30, two support plates 34 are provided which are parallel in the forward-and-backward direction and in the up-and-down direction (that is, parallel in an XZ plane). The air leak detection block 33 is placed across upper parts of the support plates 34. The air leak detection block 33 is used for detecting whether sealing members at the air outlets of the air nozzles 41A and 41B operate normally or not, in other words, detecting the air leak. On the surface of the air leak detection block 33, detection cavities 33a for air leak detection are formed with the number and pitch corresponding to those of the air nozzles. The detection cavities 33a respectively block the air outlets of the air nozzles when a later described pressurizing head 40 moves down. The air leak detection block 33 moves along the table support plate 30. Thereby, the air leak detection block 33 moves between a detecting position directly below the air nozzles 41A, 41B and a retracting position in which the air leak detection block 33 is retracted from the detecting position. Note that the cavities are not necessarily formed on the air leak detection block 34 depending on configuration of air outlet of the air nozzles. For instance, the air leak detection block may have a flat contact surface.

As shown in Fig. 6, the system controller 24 controls the rotation amount of the table motor 32 based on the signals from a table position sensor 35 to control the moving amount of the table 29 (see Fig. 5) in the forward-and-backward direction.

The table 29 is sequentially positioned in the following positions: a loading position for mounting the cartridge holder 12, the waste liquid vessel 3 or the recovery vessel 4, a dispensing position for dispensing each liquid in the extracting cartridge 2, a detecting position in which the air leak detection block 33 is placed directly below the air nozzles 41A and 41B, a pressurization start position in which a frontmost row of the extracting cartridge unit 11 is placed directly below the air nozzles 41A and 41B, and a pressurization end position in which a rearmost row of the extracting cartridge unit 11 is placed directly below the air nozzles 41A and 41B. The mounting position, the dispensing position and the detecting position (can be the same). Further, from the pressurization start position through the pressurization end position, the table 29 moves intermittently at the pitch corresponding to that between the extracting cartridges 2 (9mm in the above example). The pressurizing processing is performed each time the table 29 stops to place either row of the extracting cartridge unit 11 below the air nozzles.

Additionally, when the extracting cartridge units 11 are set only in a part of the cartridge holder 12, it is not necessary to intermittently move the table 29 by the pitch between the extracting cartridges 2. The table 29 may be moved such that the set extracting cartridge units 11 are to be sequentially placed directly below the air nozzles 41A and 41B.

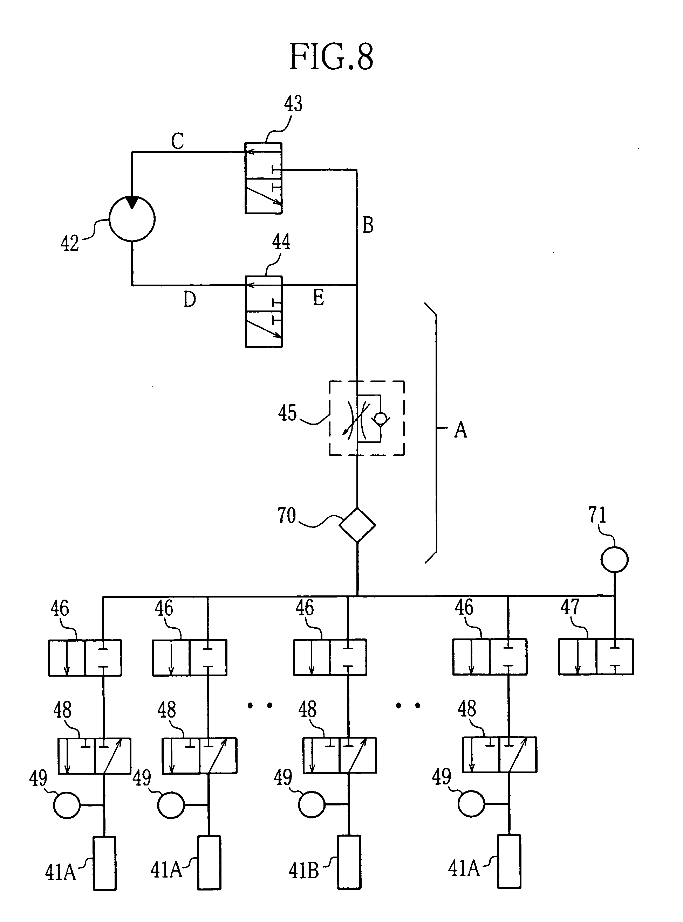

In the following, the pressurized air supplying mechanism 22 is described. As shown in Fig. 5, the pressurizing head 40 is provided in a front upper portion of the main body 10a. The air nozzles 41A and 41B are attached to the pressurizing head 40. An air pump 42, two condensation discharge valves 43 and 44, a throttle valve 45 and an air filter 70 are disposed in a lateral mid portion of the main body 10a. Plural open-close valves 46 are provided in a rear upper portion of the main body 10a. Inside the pressurizing head 40, a relief valve 47 (see Figs. 6 and 8, plural pressure release valves 48, plural pressure sensors 49 and a pressure sensor 71 for the relief valve 47. Each component is properly connected through air tubes (not shown). In particular, the air tubes respectively connecting the open-close valves 46 and the air nozzles 41A, 41B are fastened by passing through one of two guide sleeves 53. The above components constitute the pressurized air supplying mechanism 22. Each component of the pressurized air supplying mechanism 22 is controlled by the system controller (see Fig. 6).

The pressurizing head 40 is constituted of a head main body 50 and a base block 52. The head main body 50 is fixed to the base block 52 with a screw 51. The base block 52 is mounted on a guide rail 54 extending in up-and-down direction. A ball nut 55 is provided in the base block 52, and a ball screw 56 extending in the up-and-down direction is screwed into the ball nut 55. A driving force of a motor 57 for the pressurizing head is transferred to the ball screw 56 through a timing belt. When the ball screw 56 is rotated, the base 52 moves up and down along the guide rail 54. Thus, the up-and-down mechanism of the pressurizing head 40 is constituted.

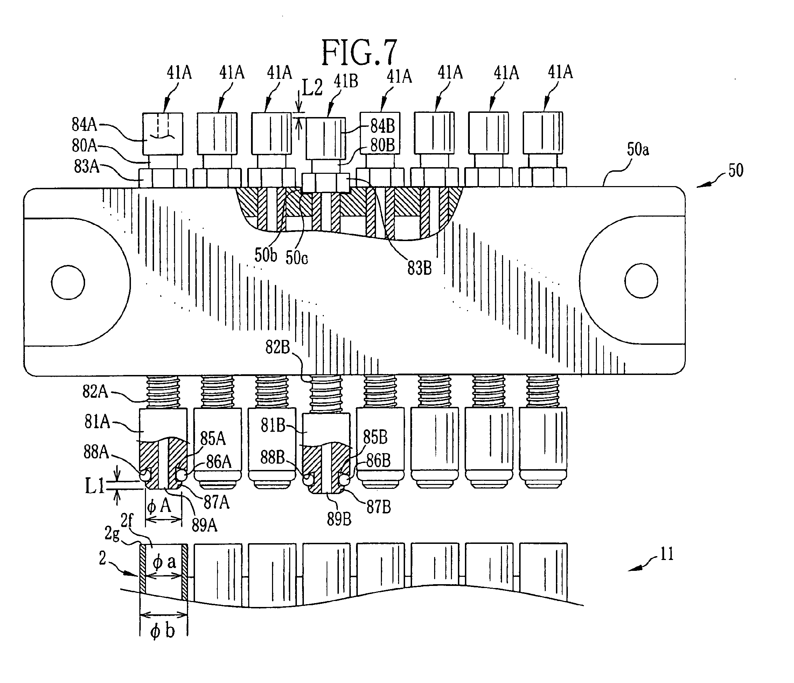

The air nozzles 41A and 41B are arranged in a row in the right-and-left direction (the Y axis direction) in the head main body 50. As shown in Fig. 7, the air nozzle 41A is movable in the up-and-down direction with respect to the head main body 50. The air nozzle 41A is constituted of a nozzle main body 80A, a nozzle head 81A, a compression spring 82A, a stopper 83A and a plug 84A. The nozzle main body 80A is formed of a tube shape. The nozzle head 81A is provided below the lower end portion of the nozzle main body 80A. The compression spring 82A biases the nozzle head 81A toward the lower direction of the head main body 50. The stopper 83A blocks the movement of the nozzle main body 80A toward the lower direction. The plug 84A is provided in an upper end portion of the nozzle main body 80A and connected to the air tube (not shown).

A groove 85A is formed in an outer peripheral surface of the nozzle head 81A. An o-ring 86A is fitted in the groove 85A. Hardness of the rubber used for forming the o-ring is determined as necessary. However, the hardness is preferably from 50 degrees to 70 degrees for practical use. An upper wall (a side wall of the groove) 88A is inclined toward the diameter direction, and a width (the up-and-down direction in the drawing) of the groove 85A is enlarged as the groove becomes deeper. With this configuration, and the inward force at the time of pressurization, the o-ring 86A hardly extended outward and good air tightness will be maintained. A lower end portion (a regulating section) 87A of the nozzle head 81A is formed such that its outer diameter *φ*A is approximately the same as or slightly smaller than an inner diameter *φ*a of the extracting cartridge 2, and the corners of the lower end section 87A are chamfered. The outer diameter *φ*A of the lower end section 87A is preferably within a range of " *φ*a-0.5mm ≤ *φ* A< *φ*a". The outer diameter is more preferably within "*φ*a -0.2mm ≤*φ* A<*φ*a" . A length L1 of the lower end portion 87A is preferably 0.1mm or more, and more preferably from 0.5mm to 1mm. Note that the lower end portion 87A fits in the inner peripheral surface of the extracting cartridge 2. On a lower end surface of the nozzle head 81A, an air outlet 89A which discharges the pressurized air is formed.

The air nozzle 41B has the same configuration and the same size as those of the air nozzle 41A. The air nozzle 41B is constituted of a nozzle main body 80B, a nozzle head 81B, a compression spring 82B, a stopper 83B, and a plug 84B. The nozzle head 81B has the same configuration and the size as those of the nozzle head 81A, and has a groove 85B, an o-ring 86B, a lower end section (a regulating section) 87B, an upper wall 88b and an air outlet 89B.

The stopper 83A of the air nozzle 41A is fixed on an upper surface 50a of the head main body 50. The stopper 83B of the air nozzle 41B is fixed on a lower surface 50c of a recess 50b formed in the upper surface 50a of the head main body 50. Thereby, a position of the air nozzle 41B (a second position) is normally located lower than a position of the air nozzle 41A (a first position) . When a difference between these positions is defined as L2, it is preferable that the L2 is more than 0.5mm, and more preferable that the L2 is approximately 1mm. By displacing the position of the air nozzle 41B from those of the air nozzles 41A, the air nozzles 41A and 41B can be easily removed from the extracting cartridges 2 when retracting after the pressurization.

As shown in Fig. 6, the pressurizing head motor 57 is controlled by the system controller 24. The system controller 24 controls the rotation amount of the pressurizing head motor 57 according to the signals from a pressurizing head position sensor 59 to control the moving amount in the up-and-down direction of the head main body 50.

As shown in Fig. 7, the head main body 50 moves between the pressurizing position and the retracting position. In the pressurizing position in which the pressurized air is supplied, The air nozzles 41A and 41B of the head main body 50 come in contact with the upper end 2g of the extracting cartridge 2 to seal the opening 2f in the airtight manner by the pressing force of the compression springs 82A and 82B. In the retracting position, the air nozzles 41A and 41B are separated from the upper end 2g of the extracting cartridge 2. Thus, the moving mechanism of the air nozzles 41A and 41B is constituted of the pressurizing head 40 and a moving mechanism for moving the pressurizing head 40 in the up-and-down direction. Note that the moving mechanism of the air nozzle may have other configuration other than that of the above example as long as the moving mechanism will move the air nozzle between the pressurizing position and the retracting position.

In Fig. 8, each valve of the pressurizing device is turned off. A condensation discharge valve 43 (a three port solenoid valve in this example) is connected in the upstream of the air pump 42. A condensation discharge valve 44 (a three port solenoid valve in this example) is connected in the downstream of the air pump 42. When the condensation is generated in the piping and becomes water droplets, the water droplets flow to the downstream and may wash off the nucleic acids adhered to the filter 2a of the cartridge 2. The condensation discharge valves 43 and 44 remove the condensation.

The condensation discharging operation is performed in the following steps. First, the relief valve 47 is turned on, and the condensation discharge valves 43 and 44 are turned on, then the air pumps 42 are activated. Air passed through A, B and C areas is supplied to the air pump 42, and then the air passes through D area and discharged outside. Thereby, the condensation in the A and B areas are removed. The air also passes through the C and D areas. However, this air is bit too moist to remove the condensation in the C and D areas. Next, the condensation discharge valve 43 is turned off, and the condensation discharge valve 44 is remained on. A dry air from outside is supplied to the air pump 42 through the C area, and discharged outside through the D area. Thereby, the condensation is removed from the C and D areas. Lastly, the condensation discharge valve 43 is turned on and the condensation discharge valve 44 is turned off. The air passes from the B area through E areas. Thereby, the condensation in the E area is removed. Thereafter, the condensation discharge valves 43 and 44 are turned off and the drive of the air pump 42 is stopped.

In the downstream of the condensation discharge valve 44, the throttle valve 45 and the air filter 70 are provided. The throttle valve 45 adjusts the flow volume of the passing air to adjust the pressurizing speed of the pressurized air supplied to the downstream. The air filter 70 removes the dust and the like in the pressurized air.

In the downstream of the throttle valve 45, the plural (eight in this example) open-close valves (two-port solenoid valves in this example), the pressure sensor 50, and the relief valve 47 are connected. The open-close valve 46 blocks the pressurized air from the upstream when turned off, and passes the pressurized air when turned on. The open-close valve 46 is selectively turned on to supply the pressurized air in the downstream. The pressure sensor 50 detects the pressure in the air passage to which the throttle valve 45, the open-close valve 46 and the relief valve 47 are connected. The relief valve 47 is turned on when the pressure in the air passage excesses the predetermined value due to the continuous driving of the air pump 42. Thereby, the pressurized air in the air passage is discharged outside.

In the downstream of the open-close valve 46, the pressure release valve 48 (a three-port solenoid valve in this example) is connected. The pressure release valve 48 blocks the pressurized air from the upstream. The pressure release valve 48 can be turned on and off. In an OFF position, the downstream is opened to the atmosphere. In an ON position, the pressurized air from the upstream is passed to the downstream.

In the downstream of each of the pressure release valves 48, the air nozzle 41A or 41B is connected through the air passage. The pressure sensors 49 are respectively connected to the air passages. The pressure sensor 49 detects the pressure inside the air passage which connects the pressure release valve 48 and the air nozzle 41A or 41B, that is, the pressure inside the extracting cartridge 2 pressed by the air nozzle 41A or 41B, and sends the detection signals to the system controller 24 (see Fig. 6).

The system controller 24 controls each valve according to the detected pressure. To be specific, when the detected pressure reaches the maximum value for the pressurization while the pressurized air is supplied to the air nozzle with the open-close valve 46 and the pressure release valve 48 turned on, the open-close valve 46 is turned off to make the air nozzle and the extracting cartridge 2 airtight. While keeping the air nozzle and the extracting cartridge 2 airtight, when it is determined that the liquid in the extracting cartridge 2 is completely discharged according to the change in the detected pressure, the pressure release valve 48 is turned off and the air nozzle and the extracting cartridge 2 are opened to the atmosphere. Note that the pressurized air within a predetermined pressure range (for instance, from 30kPa to 200kPa, more preferably from 50kPa to 150kPa) is preferably supplied.

Further, the system controller 24 also detects whether the extracting cartridges 2 are set in the cartridge holder 12 or not, the presence or absence of (each) liquid, a shortage of the liquid, clogging of the filter, and the like.

As shown in Fig. 5, the maintenance operation panel 23 is operated at the time of maintenance, and includes a display section 60 and an operation key unit 61. When the operation key unit 61 is operated, the operation signal is sent to the system controller 24 so that each section can be driven according to the operation.

Below the maintenance operation panel 23, a memory card slot 62 is provided. At the back of the memory card slot 62, a card reader is incorporated. The card reader electrically accesses to the memory card 63 and reads and writes the data. In the memory card 63, a communication information with the dispensing device 9 and a processing information of the extraction processing are written.

Hereinafter, an operation of the above configuration is described. When the powers of the dispensing device 9 and the pressurizing device 10 are respectively turned on, the dispensing device 9 performs the preparation operation. Upon receiving the preparation completion signal from the dispensing device 9, the pressurizing device 10 performs the preparation operation.

The pressurizing device 10 performs the air leak detection when the preparation operation is completed. The table 29 is moved to the detecting position and moves the air leak detection block 33 directly below the air nozzles 41A and 41B. Then, the pressurizing head is moved downward and the air nozzles 41A and 41B are moved to the pressurizing position. The pressurized air is supplied in a state that the air outlets 89A and 89B of the air nozzles 41A and 41B are blocked, and pressure changes are observed in the airtight condition. The pressure does not change when there are no defects in the o-rings 86A and 86B. When there are defects in the o-rings 86A and 86B, the pressure is decreased due to the air leak. When the air leak is found, a warning is displayed on the display section 60 of the maintenance operation panel 23. After a predetermined time, the pressurizing head 40 is moved upward and the air nozzles 41A and 41B are moved to the retracting position.

In this embodiment, the detecting position, the mount position and the dispensing position of the table 29 are in the same position. Further, the above position is set as an initial position of the table 29.

The pressurizing device 10 transmits the signal notifying the completion of the air leak detection. A handling mechanism of the dispensing device 9 grasps the waste liquid vessel 3 and mounts the waste liquid vessel 3 on the table 29. Then, the handling mechanism grasps the cartridge holder 12 in which plural cartridge units 11 are aligned and mounts the cartridge holder 12 on the table 29. Thereafter, the dispensing mechanism of the dispensing device 9 dispenses the sample liquid S in each of the extracting cartridges 2 of the extracting cartridge unit 11.

The pressurizing device 10 starts the pressurizing operation (the nucleic acid adsorption operation) upon receiving the signal notifying the completion of the sample liquid dispensing operation. The table 29 moves to the pressurization start position in which the first row of the extracting cartridge units 11 is placed directly below the air nozzles 41A and 41B.

When the pressurizing head 40 is moved downward, the air nozzle 41B comes in contact with the corresponding extracting cartridge 2 through the o-ring 86B. Then the air nozzle 41A comes in contact with the corresponding extracting cartridge 2 through the o-ring 86A. In this time, the lower end portions (the regulating portions) 87A and 87B are respectively guided and fit in the upper portions of the inner peripheral surfaces of the corresponding extracting cartridges 2. Thereby, even when the central axes of the air nozzles 41A and 41B are off with those of the corresponding extracting cartridges 2, such displacements are corrected and air nozzles 41A and 41B are precisely positioned in the diameter direction.

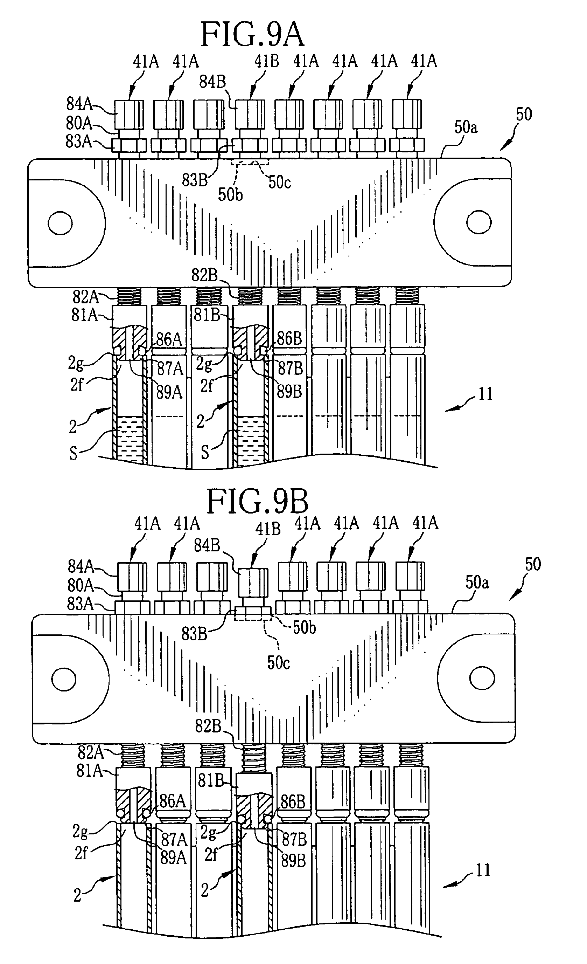

As shown in Fig. 9A, when the pressurizing head 40 is further moved downward, the air nozzles 41A and 41B uniformly press and seal, in the airtight manner, the upper ends 2g of the extracting cartridges 2 through the o-rings 86A and 86B with the aid of the elastic force of the compression springs 82A, 82B. Thus, the air nozzles 41A and 41B move to the pressurizing positions. The air pump 42 is driven in a state that all the open-close valves 46 are turned off and all the pressure release valves 48 are turned on.

The first (the leftmost) open-close valve 46 is turned on and the pressurized air is supplied to the corresponding extracting cartridge 2. When the pressure sensor checks that the pressure reaches the predetermined value, the first open-close valve 46 is turned off. Then, the second open-close valve 46 is turned on and the pressurized air is supplied to the corresponding extracting cartridge 2. The operation is performed to all the extracting cartridges 2 in the first row of the cartridge holder 12. The sample liquid S passes through the filter 2a and the nucleic acids are adhered to the filter 2a. Other liquid components are discharged to the waste liquid vessel 3. When the whole sample liquid S passes through the filter 2a and the pressure is decreased, the pressure release valve 48 is turned off. Note that the inserted portions of the air nozzles 41A and 41B into the cartridges 2 are very small, so the liquids do not adhere to the inserted portions. Accordingly, the contaminations are not generated.

When all the pressure release valves 48 are turned off, the pressure head 40 moves upward. As shown in Fig.9B, first, seven air nozzles 41A are separated from the corresponding extracting cartridges 2. Next, one air nozzle 41B is separated from the corresponding extracting cartridge 2. When the air nozzles 41A are separated, since lower end portions 87A of the air nozzles 41A are fitted in the corresponding extracting cartridges 2, the extracting cartridge unit 11 is likely to move upward along with the air nozzles 41A by a fitting force of seven lower end portions 87A. However, since the extracting cartridge unit 11 is pressed by the air nozzle 41B, the air nozzles 41A easily separate from the extracting cartridges 2. When the air nozzle 41B is separated, the lower end portion 87B of the air nozzle 41B fits in the inner peripheral surface of the corresponding extracting cartridge 2. However, a fitting force of one lower end portion 87B is weak and the air nozzle 41B easily separates from the corresponding extracting cartridge 2. When the pressurizing head 40 further moves upward, the air nozzles 41A and 41B return to the retracted position. All the pressure release valves 48 are turned on again.

When the pressurizing operation of the first row of the extracting cartridges 2 is completed, the table 29 moves toward the back by the pitch of the extracting cartridge 2. The second row of the extracting cartridges 2 is placed directly below the air nozzles 41A and 41B. The air nozzles 41A and 41B moves toward the pressurizing position and the pressurizing operation is performed to the second row in the same manner as the first row. Thereafter, the air nozzles 41A and 41B are moved to the retracting position. Thus, the pressurizing operation is repeated to each row. After the pressurizing operation is performed to all the rows, the table 29 is returned to the initial position. Thus, the pressurizing processing can be performed to a plurality of extracting cartridges (96 cartridges in this example) in a short time.

The pressurizing device 10 transmits the signal to notify the completion of the pressurizing operation (the nucleic acid adsorption operation) to the dispensing device 9. Then, the dispensing mechanism of the dispensing device 9 dispenses the washing liquid W into the extracting cartridges 2 at one time.

When the pressurizing device 10 receives the signal to notify the completion of the washing liquid dispensing operation from the dispensing device 9, the pressurizing operation (washing operation) is started. The table 29 moves to the pressurizing start position. The pressurizing operation of the washing liquid W is performed in the same manner as that of the sample liquid S. The washing liquid W passed through the filter 2a is discharged to the waste liquid vessel 3 with the impurities other than nucleic acids. After the pressurizing operation is performed to all the rows, the table 29 is returned to the initial position.

The pressurizing device 10 transmits the signal to notify the completion of the pressurizing operation (washing operation) to the dispensing device 9. The handling mechanism of the dispensing device 9 holds the cartridge holder 12 and temporarily puts the cartridge holder 12 on the holder rack. Next, the handling mechanism holds the waste liquid vessel 3 and puts the waste liquid vessel 3 on the waste liquid vessel rack. Thereafter, the handling mechanism holds the recovery vessel 4 in the recovery vessel rack and mounts it on the table 29 of the pressurizing device 10. Thereafter, the handling mechanism holds the cartridge holder 12 in the holder rack and mounts the cartridge holder 12 on the table 29. The dispensing mechanism of the dispensing device 9 dispenses the recovery liquid R into the extracting cartridges 2 at one time.

Upon receiving the signal to notify the completion of the recovery liquid dispensing operation from the dispensing device 9, the pressurizing device 10 starts the pressurizing operation (nucleic acid recovery operation). The table 29 moves to the pressurization start position. The pressurizing operation to the recovery liquid R is performed in the same manner as those of the sample liquid A and the washing liquid W. The recovery liquid R passes through the filter 2a to the corresponding recovery tube in the recovery vessel 4 together with the nucleic acids which have been adsorbed to the filter 2a.

The pressurizing device 10 transmits the signal notifying the completion of the pressurizing operation (nucleic acid recovery operation) to the dispensing device 9. The handling mechanism of the dispensing device 9 holds the cartridge holder 12 and puts it in the holder rack, and then holds the recovery vessel 3 to put it in the recovery vessel rack. The recovery liquids in the recovery tubes 16a in the recovery vessel 3 are analyzed by another device. The used extracting cartridges in the cartridge holder 12 are discarded.

When the pressurizing device 10 receives the signal from the dispensing device 9 notifying the recovery vessel 3 is accommodated, the condensation discharging operation is performed in which the condensation in the piping of the pressurized air supplying mechanism 22 is removed. The operation can be performed at any suitable timing but not to interfere the extracting operation. The operation can be performed, for instance, between the nucleic acid adsorbing operation and the washing operation. After the condensation discharging operation, if the extracting operation is to be continued, above-mentioned extracting operation is repeated in sequence using another cartridge holder holding new extracting cartridges and a new recovery vessel.

According to the above embodiment, the extracting cartridge unit in which plural extracting cartridges are connected is used. Accordingly, it becomes easy to handle a plurality of extracting cartridges. The process for setting the extracting cartridges in the cartridge holder is facilitated.

According to the above embodiment, the pressurization processing can be performed to the plurality of extracting cartridges in a short time. Further, the liquid can be dispensed into the plurality of extracting cartridges in a short time. Thereby, the extracting processing to a multitude of samples can be performed in a short time.

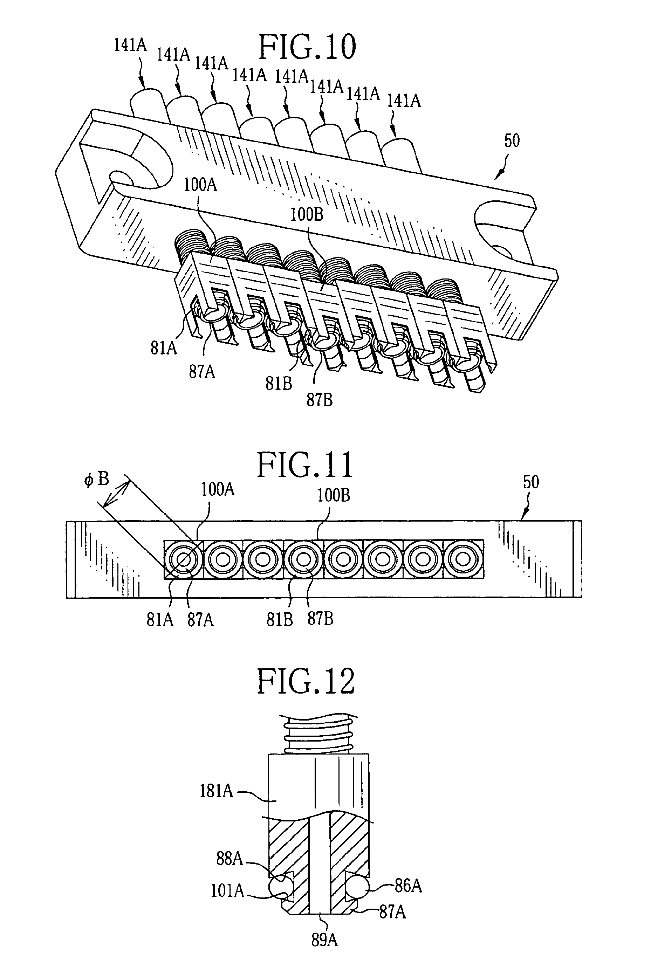

In the above embodiment, a part of the air nozzle is fit in the inner peripheral surface of the extracting cartridge for positioning the air nozzle. In addition, a part of the air nozzle can be fit onto the outer peripheral surface of the extracting cartridge. As shown in Figs. 10 and 11, air nozzles 141A and 141B having positioning frames 100A and 100B in their outer peripheries are used. An inner diameter *φ*B of the positioning frames 100A and 100B is formed to be approximately the same size as an outer diameter *φ*b of the extracting cartridge 2 (see Fig. 7) . The inner diameter *φ*B is preferably within a range of "*φ*b < *φ*B ≤ *φ* b + 0.5mm", more preferably with in a range of "*φ*b < *φ* B ≤ *φ*b + 0.2mm" . The air nozzles 141A and 141B are securely positioned by fitting the air nozzles 141A and 141B in the inner peripheral surface and the outer peripheral surface of the extracting cartridges. Note that it is also possible to provide only the positioning frames 100A and 100B without providing lower end sections 87A and 87B which fit in the inner peripheral surface of the extracting cartridge.

In the above embodiment, when the groove for fitting to the 0-ring is formed in the outer periphery of the nozzle head, the width (the width in the up-and-down direction) of the groove is increased as the groove becomes deeper by inclining the upper wall. However, as shown in Fig. 12, a nozzle head 181A whose lower wall 101A is inclined can be used. Further, as long as the width of the groove increases as the groove becomes deeper, the groove is not limited to the above shape and can be of any arbitrary shape.

In the above embodiment, one air nozzle is protruded downward among eight air nozzles, but any arbitrary number of nozzles can be protruded downward. However, it is preferable to protrude few air nozzles, for instance, one to three air nozzles. In the above embodiment, a fourth air nozzle from the left among the eight air nozzles is protruded downward. However, any air nozzle can be protruded downward. However, it is preferable to protrude the air nozzle placed close to the center portion. In the above embodiment, the air nozzles are held in either of the first or second positions. However, it is also possible to add, for instance, a third position to hold the air nozzle. In this case, the air nozzles placed closer to the center should contact to the cartridges at lower position. Accordingly, the air nozzle is more securely separated from the extracting cartridge.

The above embodiment is described in a state that the air nozzles are arranged in one row. However, the air nozzles can be arranged in plural rows. In that case, the table is moved according to the number of the nozzles rows. For instance, when the air nozzles are arranged in three rows, the table is moved by the amount which is three times longer as the pitch between the extracting cartridges (27mm in the above example).

In the above embodiment, eight extracting cartridges constitute the extracting cartridge unit. However, any arbitrary number of cartridges can be used for forming the extracting cartridge unit. Further, it is also possible to use the extracting cartridge unit in the matrix arrangement in which plural rows of extracting cartridges are connected with each other.

In the above embodiment, the cartridge holder is capable of holding 12 rows of the extracting cartridges. However, the number of rows can be set arbitrarily. Further, by adopting an endless loading mechanism, more numbers of the extracting cartridges can be handled.

In the above embodiment, the cartridge holder is moved to the forward-and-backward direction with respect to the air nozzle. However, it is also possible to fix the cartridge holder and move the air nozzle in the forward-and-backward direction with respect to the cartridge holder.

In the above embodiment, pressurization is used as a means to apply an external force to each liquid for passing the liquid through the filter. However, depressurization can be used instead.

An individual identifying element, for instance, an IC tag (an IC chip) which enables to identify each unit or each cartridge may be attached to each extracting cartridge unit or each extracting cartridge. Each extracting cartridge unit or each extracting cartridge can be controlled according to the individual identification element.

In the above embodiment, the washing operation is performed using the washing liquid. However, washing processing may not be necessary according to a permeability of the filter member. In the above embodiment, the recovery operation is performed using the recovery liquid. However, the recovery liquid is not necessarily used. For instance, it is possible to analyze the specific substance as it adsorbs to the filter member.

In the above embodiment, the nucleic acid extraction apparatus is described. However, the present invention is not limited to this and can also be applied for adsorption of various specific substances to the filter member.

In the above embodiment, the nucleic extracting apparatus is constituted of the dispensing device and the pressurizing device which are separately formed. Instead, the dispensing device and the pressurizing device are integrally formed such as one disclosed in the Japanese Patent Laid-Open Publication No. 2005-110669.

## Claims

1. A pressurized air supplying mechanism (22) which supplies pressurized air through an inlet (2f) of at least one row of cartridges (2) each having a filter member (2a) after a liquid is dispensed into said cartridge through said inlet, said pressurized air allowing said liquid to pass through said filter member and leave from an outlet of said cartridges, said pressurized air supplying mechanism comprising:
air nozzles (41A,41B) including an air outlet (89A) for discharging said pressurized air, a sealing member (86A) provided around said air outlet, for pressing against said inlet of said cartridges, and a regulating section (87A) provided at a lower end of said air outlet for preventing a displacement of said nozzles in a diameter direction of said cartridges; and
an air nozzle moving section for moving said air nozzles between a pressurizing position at which said air nozzles are pressed against said inlet of said cartridges through said sealing member to seal said inlet in an airtight manner, and a retracting position at which said air nozzles are retracted from said inlet of said cartridges,
wherein an outer diameter of said regulating section (87A) is substantially the same as an inner diameter of said cartridges such that said regulating section fits in an inner peripheral surface of said cartridges, wherein said cartridges are aligned in at least one row in a first direction to form a cartridge row, and wherein said air nozzle moving section has a pressurizing head (40) which retains said air nozzles corresponding to said cartridges in said cartridge row, and a pressurizing head moving section for moving said pressurizing head in an up-and-down direction between said pressurizing position and said retracting position,**characterized in that** said pressurizing head retains each of said air nozzles in an independently movable manner in said up-and-down direction with said air nozzles biased downward, and said pressurizing head retains at least one air nozzle (41B) to protrude in a position lower than the other nozzles, and
wherein said pressurizing head including:
a head main body for retaining each of said air nozzles in an independently movable manner in an up-and-down direction;
a biasing member (82A) for biasing each of said air nozzles downward with respect to said head main body;
a locking member (83A) for locking said other nozzles in a first position against biasing force of said biasing member, and for locking said at least one air nozzle (41B) in a second position lower than said first position against said biasing force.

2. A pressurized air supplying mechanism according to claim 1, wherein φ a-0.5mm ≤ φ A< φ a is satisfied when said outer diameter of said regulating section is φ A and said inner diameter of said cartridge is ϕa.

3. A pressurized air supplying mechanism according to claim 1, wherein φ a-0.2mm ≤ φ A< φ a is satisfied when said outer diameter of said regulating section is φA and said inner diameter of said cartridge is φa.

4. A pressurized air supplying mechanism according to claim 1, wherein an edge of said regulating section is chamfered.

5. A pressurized air supplying mechanism according to claim 1, wherein said sealing member is an o-ring, a groove (85A) for fitting to said o-ring is formed in said outer peripheral surface of said air nozzle, said groove curving in a diameter direction of said air nozzle, a width of said groove increasing in accordance with a depth of said groove.

6. A pressurized air supplying mechanism according to claim 5, wherein at least one of two side walls of said groove is inclined such that said width is increased as said depth is increased.

7. A pressurized air supplying mechanism according to claim 5, a distance between a lower end of said o-ring and a lower end of said regulating section is 0.1mm or more.

8. A pressurized air supplying mechanism according to claim 5, a distance between a lower end of said o-ring and a lower end of said regulating section ranges from 0.5mm to 1mm.

9. A pressurized air supplying mechanism according to claim 1, comprising:
a cartridge holder (12) for retaining plural cartridge rows, each of said cartridge rows having N numbers of said cartridges (2) being aligned in a first direction in each of said cartridge rows;
an air nozzle row in which N numbers of air nozzles (41A) are aligned in said first direction, said N numbers of air nozzles corresponding to N numbers of said cartridges forming said cartridge row, each of said air nozzles including an air outlet (89A) for discharging said pressurizing air, a sealing member (86A) to be pressed against said inlet of said cartridge and a regulating section (87A) provided at a lower end of said air outlet for preventing a displacement of said air nozzle in a diameter direction of said cartridge;
a pressurizing head (40) for retaining said air nozzle row;
a pressurizing head moving mechanism for moving said pressurizing head in an up-and-down direction between a pressurizing position and a retracting position, each of said air nozzles being pressed against said inlet of said cartridge through said sealing member to seal said inlet in an airtight manner for supplying pressurized air from said air outlet in said pressurizing position, and said air nozzle being retracted from said cartridge in said retracting position; and
a moving mechanism for moving one of said pressurizing head or said cartridge holder relative to the other in a second direction perpendicular to said first direction.

10. A pressurizing device according to claim 9, wherein said pressurizing head retains each of said air nozzles in an independently movable manner in an up-and-down direction, said pressurizing head retains at least one air nozzle (41B) to protrude in a position lower than the other nozzles.

11. A pressurizing device according to claim 9, wherein said pressurizing head including:
a head main body for retaining each of said air nozzles in an independently movable manner in an up-and-down direction;
a biasing member (82A) for biasing each of said air nozzles downward with respect to said head main body; and
a locking member (83A) for locking said other air nozzles in a first position against biasing force of said biasing member, and for locking said at least one air nozzle in a second position lower than said first position against said biasing force.

12. An extracting apparatus for adsorbing a specific substance through a filter member (2a) in a cartridge (2) when a liquid passes through said filter member, said liquid being dispensed through an inlet (2f) of said cartridge and pressurized to pass through said filter member by a pressurized air supplied from said inlet, said extracting apparatus comprising:
a cartridge holder (12) for retaining plural cartridge rows, each of said cartridge rows having N numbers of said cartridges being in a first direction in each of said cartridge rows;
a dispensing device for dispensing said liquid in said N numbers of said cartridges;
an air nozzle row in which N numbers of air nozzles (41A) are aligned in said first direction, said N numbers of air nozzles (41A) corresponding to N numbers of said cartridges forming one cartridge row, each of said air nozzles including an air outlet for discharging said pressurized air, a sealing member (86A) provided around said air outlet and pressed against said inlet of said cartridge and a regulating section (87A) provided at a lower end of said air outlet for preventing a displacement of said air nozzle in a diameter direction of said cartridge;
a pressurizing head (40) for retaining said air nozzle row;
a pressurizing head moving mechanism for moving said pressurizing head in an up-and-down direction between a pressurizing position and a retracting position, each air nozzle being pressed against said inlet of said cartridge through said sealing member to seal said inlet in an airtight manner for supplying a pressurized air from said air outlet in said pressurizing position, and said air nozzle being retracted from said cartridge in said retracting position;
a moving mechanism for moving one of said pressurizing head or said cartridge holder relative to the other in a second direction perpendicular to said first direction,
**characterized in that**
said pressurizing head retains each of said air nozzles in an independently movable manner in an up-and-down direction with said air nozzles biased downward, and said pressurizing head retains at least one air nozzle (41B) to protrude in a position lower than the other nozzles, and said pressurizing head includes
a head main body for retaining each of said air nozzles in an independently movable manner in an up-and-down direction;
a biasing member (82A) for biasing each of said air nozzles downward with respect to said head main body; and
a locking member (83A) for locking said other air nozzles in a first position against biasing force of said biasing member, and for locking said at least one air nozzle (41B) in a second position lower than said first position against said biasing force.

13. An extracting apparatus according to claim 12, wherein said liquid dispensed into said cartridge is at least one of a sample liquid including a specific substance, a washing liquid for washing off impurities other than said specific substance adhered to said filter member and a recovery liquid for separating and recovering said specific substance adhered to said filter member.

## Patentansprüche

1. Druckluftzuführmechanismus (22), der Druckluft durch einen Einlass (2f) von mindestens einer Reihe von jeweils mit einem Filterelement (2a) ausgestatteten Kartuschen (2) einbringt, nachdem in die Kartusche über den Einlass eine Flüssigkeit eingebracht wurde, wobei die Druckluft der Flüssigkeit ermöglicht, durch das Filterelement hindurchzutreten, um aus einem Auslass der Kartuschen auszutreten, umfassend:
Luftdüsen (41A, 41B) mit einem Luftauslass (89A) zum Auslassen der Druckluft, einem Dichtungselement (86A), welches um den Luftauslass herum vorgesehen ist, um gegen den Einlass der Kartuschen gedrückt zu werden, und mit einem Regulierabschnitt (87A) am unteren Ende des Luftauslasses, um eine Verlagerung der Düsen in eine Durchmesserrichtung der Kartuschen zu unterbinden; und
einen Luftdüsen-Bewegungsabschnitt zum Bewegen der Luftdüsen zwischen einer Druckbeaufschlagungsstellung, in der die Düsen über das Dichtungselement zum Abdichten des Einlasses in luftdichter Weise gegen den Einlass der Kartuschen gedrückt werden, und einer zurückgezogenen Stellung, in der die Luftdüsen von dem Einlass der Kartuschen abgerückt sind, wobei ein Außendurchmesser des Regulierabschnitts (87A) im wesentlichen der gleiche ist wie der Innendurchmesser der Kartuschen, so dass der Regulierabschnitt in eine Innenumfangsfläche der Kartuschen passt, wobei die Kartuschen in mindestens einer Reihe in einer ersten Richtung zur Bildung einer Kartuschenreihe ausgerichtet sind, und wobei der Luftdüsen-Bewegungsabschnitt einen Druckbeaufschlagungskopf (40) aufweist, welcher die Luftdüsen entsprechend den Kartuschen in der Kartuschenreihe hält, ferner einen Druckbeaufschlagungskopf-Bewegungsabschnitt zum Bewegen des Druckbeaufschlagungskopfs in einer Aufwärts-Abwärts-Richtung zwischen der Druckbeaufschlagungsstellung und der zurückgezogenen Stellung, **dadurch gekennzeichnet, dass** der Druckbeaufschlagungskopf jede der Luftdüsen in einer unabhängig bewegbaren Weise in Aufwärts-Abwärts-Richtung bei gleichzeitiger Abwärts-Vorspannung der Luftdüsen hält, und der Druckbeaufschlagungskopf mindestens eine Luftdüse (41 B) so hält, dass diese in einer Stellung unter den übrigen Düsen vorsteht, und wobei der Druckbeaufschlagungskopf enthält:
einen Kopf-Hauptkörper zum Halten jeder der Luftdüsen in unabhängig bewegbarer Weise in Aufwärts-Abwärts-Richtung;
ein Vorspannelement (82A) zum Vorspannen jeder der Luftdüsen in Abwärtsrichtung bezüglich des Kopf-Hauptkörpers;
ein Verriegelungselement (83A) zum Sperren der übrigen Düsen in einer ersten Stellung gegen die Vorspannkraft des Vorspannelements, und zum Verriegeln der mindestens einen Luftdüse (41 B) in einer zweiten Stellung unterhalb der ersten Stellung gegenüber der Vorspannkraft.

2. Mechanismus nach Anspruch 1, bei dem φa-0,5 mm ≤φA < φa gilt, wenn der Außendurchmesser des Regulierabschnitts φA und der Innendurchmesser der Kartusche φa beträgt.

3. Mechanismus nach Anspruch 1, bei dem φa-0,2 mm ≤φA < φa gilt, wenn der Außendurchmesser des Regulierabschnitts φA und der Innendurchmesser der Kartusche φa beträgt.

4. Mechanismus nach Anspruch 1, bei dem eine Kante des Regulierabschnitts abgeschrägt ist.

5. Mechanismus nach Anspruch 1, bei dem das Dichtungselement ein O-Ring ist und eine Nut (85A) zum Aufnehmen des O-Rings in der Außenumfangsfläche der Luftdüse gebildet ist, wobei die Nut sich in einer Durchmesserrichtung der Luftdüse krümmt und eine Breite hat, die abhängig von der Tiefe der Nut zunimmt.

6. Mechanismus nach Anspruch 5, bei dem mindestens eine der beiden Seitenwände der Nut derart geneigt ist, dass die Breite mit zunehmender Tiefe zunimmt.

7. Mechanismus nach Anspruch 5, bei dem ein Abstand zwischen einem unteren Ende des O-Rings und einem unteren Ende des Regulierabschnitts 0,1 mm oder mehr beträgt.

8. Mechanismus nach Anspruch 5, bei dem ein Abstand zwischen dem unteren Ende des O-Rings und einem unteren Ende des Regulierabschnitts von 0,5 mm bis 1 mm reicht.

9. Mechanismus nach Anspruch 1, umfassend:
einen Kartuschenhalter (12) zum Halten mehrerer Kartuschenreihen, von denen jede Kartuschenreihe N Kartuschen (2) aufweist, die in einer ersten Richtung in jeder der Reihen ausgerichtet sind;
eine Luftdüsenreihe, in der N Luftdüsen (41A) in der ersten Richtung ausgerichtet sind, wobei die N Luftdüsen den N Kartuschen der Kartuschenreihe entsprechen und jede der Luftdüsen einen Luftauslass (89A) zum Ausleiten der Druckluft, ein Dichtungselement (86A) zum Andrücken des Einlasses der Kartusche und einen Regulierabschnitt (87a) am unteren Ende des Luftauslasses zum Verhindern eines Versatzes der Luftdüse in Durchmesserrichtung der Kartusche aufweist;
einen Druckbeaufschlagungskopf (40) zum Halten der Luftdüsenreihe;
einen Druckbeaufschlagungskopf-Bewegungsmechanismus zum Bewegen des Druckbeaufschlagungskopfs in Aufwärts-Abwärts-Richtung zwischen einer Druckbeaufschlagungsposition und einer zurückgezogenen Position, wobei jede der Luftdüsen über das Dichtungselement zum Abdichten des Einlasses in luftdichter Weise gegen den Einlass der Kartusche gedrückt wird, um Druckluft aus dem Luftauslass in der Druckbeaufschlagungsposition herauszulassen, und die Luftdüse von der Kartusche in der zurückgezogenen Position zurückgezogen ist; und
einen Bewegungsmechanismus zum Bewegen entweder des Druckbeaufschlagungskopfs oder des Kartuschenhalters relativ zueinander in einer zweiten Richtung rechtwinklig zu der ersten Richtung.

10. Druckbeaufschlagungseinrichtung nach Anspruch 9, bei der der Druckbeaufschlagungskopf jede der Luftdüsen in Aufwärts-Abwärts-Richtung in unabhängig bewegbarer Weise hält, wobei der Druckbeaufschlagungskopf mindestens eine Luftdüse (41 B) derart hält, dass diese in einer Stellung unterhalb der übrigen Düsen vorsteht.

11. Einrichtung nach Anspruch 9, bei der der Druckbeaufschlagungskopf enthält:
einen Kopf-Hauptkörper zum Halten jeder der Luftdüsen in unabhängig bewegbarer Weise in Aufwärts-Abwärts-Richtung;
ein Vorspannelement (82A) zum Vorspannen jeder der Luftdüsen in Abwärtsrichtung bezüglich des Kopf-Hauptkörpers;
ein Verriegelungselement (83A) zum Sperren der übrigen Düsen in einer ersten Stellung gegen die Vorspannkraft des Vorspannelements, und zum Verriegeln der mindestens einen Luftdüse in einer zweiten Stellung unterhalb der ersten Stellung gegenüber der Vorspannkraft.

12. Extrahiervorrichtung zum Adsorbieren einer spezifischen Substanz über ein Filterelement (2a) in einer Kartusche (2), wenn eine Flüssigkeit durch das Filterelement hindurchtritt, welche Flüssigkeit durch einen Einlass (2f) der Kartusche eingebracht und durch über den Einlass zugeführte Druckluft unter Druck gesetzt wird, um durch das Filterelement hindurchzutreten, umfassend:
einen Kartuschenhalter (12) zum Halten mehrerer Kartuschenreihen, von denen jede Kartuschenreihe N Kartuschen enthält, die in einer ersten Richtung in jeder der Kartuschenreihen enthalten sind;
eine Einbringeinrichtung zum Einbringen der Flüssigkeit in die N Kartuschen;
eine Luftdüsenreihe, in der N Luftdüsen (41A) in der ersten Richtung ausgerichtet sind, wobei die N Luftdüsen (41A) den N Kartuschen in einer Kartuschenreihe entsprechen, wobei jede der Luftdüsen einen Luftauslass zum Auslassen der Druckluft, ein Dichtungselement (86A), welches den Luftauslass umgibt und gegen den Einlass der Kartusche gedrückt wird, und einen Regulierabschnitt (87A) am unteren Ende des Luftauslasses zum Verhindern eines Versatzes der Luftdüse in einer Durchmesserrichtung der Kartusche aufweist;
einen Druckbeaufschlagungskopf (40) zum Halten der Luftdüsenreihe;
einen Druckbeaufschlagungskopf-Bewegungsmechanismus zum Bewegen des Druckbeaufschlagungskopfs in einer Aufwärts-Abwärts-Richtung zwischen einer Druckbeaufschlagungsposition und einer zurückgezogenen Position, wobei jede Luftdüse gegen den Einlass der Kartusche über das Dichtungselement zum Abdichten des Einlasses in luftdichter Weise drückt, um Druckluft aus dem Luftauslass in der Druckbeaufschlagungsposition zu liefern, und die Luftdüse in der zurückgezogenen Position von der Kartusche abgerückt ist;
einen Bewegungsmechanismus zum Bewegen entweder des Druckbeaufschlagungskopfs oder des Kartuschenhalters relativ zueinander in einer zweiten zu der ersten Richtung rechtwinkligen Richtung,
**dadurch gekennzeichnet, dass** der Druckbeaufschlagungskopf jede der Luftdüsen in Aufwärts-Abwärts-Richtung unabhängig bewegbar hält, während die Luftdüsen nach unten vorgespannt sind, und der Druckbeaufschlagungskopf mindestens eine Luftdüse (41 B) derart hält, dass diese in einer Stellung vorsteht, die niedriger gelegen ist als die anderen Düsen, und der Druckbeaufschlagungskopf enthält:
einen Kopf-Hauptkörper zum Halten jeder der Luftdüsen in unabhängig bewegbarer Weise in Aufwärts-Abwärts-Richtung;
ein Vorspannelement (82A) zum Vorspannen jeder der Luftdüsen in Abwärtsrichtung bezüglich des Kopf-Hauptkörpers;
ein Verriegelungselement (83A) zum Sperren der übrigen Düsen in einer ersten Stellung gegen die Vorspannkraft des Vorspannelements, und zum Verriegeln der mindestens einen Luftdüse in einer zweiten Stellung unterhalb der ersten Stellung gegenüber der Vorspannkraft.

13. Vorrichtung nach Anspruch 12, bei der die in die Kartusche eingebrachte Flüssigkeit eine Probenflüssigkeit, die eine spezifische Substanz enthält, eine Spülflüssigkeit zum Wegspülen von Verunreinigungen mit Ausnahme der spezifischen Substanz, die an dem Filterelement haftet, und/oder eine Regenerierflüssigkeit zum Separieren und Wiedergewinnen der spezifischen Substanz, die an dem Filterelement haftet, ist.

## Revendications

1. Mécanisme d'alimentation en air sous pression (22) qui délivre de l'air sous pression à travers une entrée (2f) d'au moins une rangée de cartouches (2) ayant chacune un élément de filtre (2a) après qu'un liquide soit distribué dans ladite cartouche à travers ladite entrée, ledit air sous pression permettant audit liquide de passer à travers ledit élément de filtre et de sortir par une sortie desdites cartouches, ledit mécanisme d'alimentation en air sous pression comportant :
des buses d'air (41A, 41B) comprenant une sortie d'air (89A) pour l'évacuation dudit air sous pression, un élément d'étanchéité (86A) prévu autour de ladite sortie d'air, afin d'appuyer contre ladite entrée desdites cartouches, et une section de régulation (87A) prévue au niveau d'une extrémité inférieure de ladite sortie d'air afin d'empêcher un déplacement desdites buses dans une direction de diamètre desdites cartouches ; et
une section de déplacement de buse d'air destinée à déplacer lesdites buses d'air, entre une position de pressurisation dans laquelle lesdites buses d'air sont poussées contre ladite entrée desdites cartouches par l'intermédiaire de ledit élément d'étanchéité de façon à obturer ladite entrée d'une manière étanche à l'air, et une position de rétraction dans laquelle lesdites buses d'air sont rétractées de ladite entrée desdites cartouches,
un diamètre extérieur de ladite section de régulation (87A) étant sensiblement le même qu'un diamètre intérieur desdites cartouches de telle sorte que ladite section de régulation s'ajuste dans une surface périphérique intérieure desdites cartouches, lesdites cartouches étant alignées dans au moins une rangée dans une première direction afin de former une rangée de cartouches, et ladite section de déplacement de buse d'air ayant une tête de pressurisation (40) qui retient lesdites cartouches correspondantes desdites buses d'air dans ladite rangée de cartouches, et une section de déplacement de tête de pressurisation destinée à déplacer ladite tête de pressurisation dans une direction de haut en bas entre ladite position de pressurisation et ladite position de rétraction, **caractérisé en ce que** ladite tête de pressurisation retient chacune desdites buses d'air d'une manière indépendamment mobile dans ladite direction de haut en bas avec lesdites buses d'air rappelées bas, et ladite tête de pressurisation retient au moins une buse d'air (41B) afin de dépasser dans une position plus basse que les autres buses, et
ladite tête de pressurisation comprenant :
un corps principal de tête destiné à retenir chacune desdites buses d'air d'une manière indépendamment mobile dans une direction de haut en bas ;
un élément de rappel (82A) destiné à rappeler chacune desdites buses d'air vers le bas par rapport audit corps principal de tête ;
un élément de blocage (83A) destiné à bloquer lesdites autres buses dans une première position à l'encontre d'une force de rappel dudit élément de rappel, et destiné à bloquer ladite au moins une buse d'air (41B) dans une deuxième de position plus basse que ladite première position à l'encontre de ladite force de rappel.

2. Mécanisme d'alimentation en air sous pression selon la revendication 1, dans lequel φa - 0,5 mm ≤ φA < φa est satisfaite quand ledit diamètre extérieur de ladite section de régulation est φA et ledit diamètre intérieur de ladite cartouche est φa.

3. Mécanisme d'alimentation en air sous pression selon la revendication 1, dans lequel φa - 0,2 mm ≤ φA < φa est satisfaite quand ledit diamètre extérieur de ladite section de régulation est φA et ledit diamètre intérieur de ladite cartouche est φa.

4. Mécanisme d'alimentation en air sous pression selon la revendication 1, dans lequel un bord de ladite section de régulation est chanfreiné.

5. Mécanisme d'alimentation en air sous pression selon la revendication 1, dans lequel ledit élément d'étanchéité est un joint torique, une gorge (85A) pour le montage dudit joint torique est formée dans ladite surface périphérique externe de ladite buse d'air, ladite gorge s'incurvant dans une direction de diamètre de ladite buse d'air, une largeur de ladite gorge augmentant en fonction d'une profondeur de ladite gorge.

6. Mécanisme d'alimentation en air sous pression selon la revendication 5, dans lequel au moins une des deux parois latérales de ladite gorge est inclinée de telle sorte que ladite largeur est accrue lorsque ladite profondeur est accrue.

7. Mécanisme d'alimentation en air sous pression selon la revendication 5, une distance entre une extrémité inférieure dudit joint torique et une extrémité inférieure de ladite section de régulation étant de 0,1 mm ou plus.

8. Mécanisme d'alimentation en air sous pression selon la revendication 5, une distance entre une extrémité inférieure dudit joint torique et une extrémité inférieure de ladite section de régulation s'étend de 0,5 mm à 1 mm.

9. Mécanisme d'alimentation en air sous pression selon la revendication 1, comportant :
un support de cartouche (12) destiné à retenir plusieurs rangées de cartouches, chacune desdites rangées de cartouches ayant des nombres N desdites cartouches (2) qui sont alignés dans une première direction dans chacune desdites rangées de cartouche ;
une rangée de buses d'air dans laquelle des nombres N de buses d'air (41A) sont alignés dans ladite première direction, lesdits nombres N de buses d'air correspondant aux nombres N desdites cartouches formant ladite rangée de cartouches, chacune desdites buses d'air comprenant une sortie d'air (89A) pour l'évacuation dudit air de pressurisation, un élément d'étanchéité (86A) devant être poussé contre ladite entrée de ladite cartouche et une section de régulation (87A) prévue au niveau d'une extrémité inférieure de ladite sortie d'air afin d'empêcher un déplacement de ladite buse d'air dans une direction de diamètre de ladite cartouche ;
une tête de pressurisation (40) destinée à retenir ladite rangée de buses d'air ;
un mécanisme de déplacement de tête de pressurisation destiné à déplacer ladite tête de pressurisation dans une direction de haut en bas entre une position de pressurisation et une position de rétraction, chacune desdites buses d'air étant poussées contre ladite entrée de ladite cartouche par ledit élément d'étanchéité afin d'obturer ladite entrée d'une manière étanche à l'air de façon à délivrer de l'air sous pression à partir de ladite sortie d'air dans ladite position de pressurisation, et ladite buse d'air étant rétractée de ladite cartouche dans ladite position de rétraction ; et
un mécanisme de déplacement destiné à déplacer ladite tête de pressurisation ou ledit support de cartouche l'un par rapport à l'autre dans une deuxième direction perpendiculaire à ladite première direction.

10. Dispositif de pressurisation selon la revendication 9, dans lequel ladite tête de pressurisation retient chacune desdites buses d'air d'une manière indépendamment mobile dans une direction de haut en bas, ladite tête de pressurisation retient au moins une buse d'air (41B) afin de dépasser dans une position plus basse que les autres buses.

11. Dispositif de pressurisation selon la revendication 9, dans lequel ladite tête de pressurisation comprend :
un corps principal de tête destiné à retenir chacune desdites buses d'air d'une manière indépendamment mobile dans une direction de haut en bas ;
un élément de rappel (82A) destiné à rappeler chacune desdites buses d'air vers le bas par rapport audit corps principal de tête ; et
un élément de blocage (83A) destiné à bloquer lesdites autres buses d'air dans une première position à l'encontre d'une force de rappel dudit élément de rappel, et destiné à bloquer ladite au moins une buse d'air dans une deuxième position plus basse que ladite première position à l'encontre de la force de rappel.

12. Appareil d'extraction destiné à adsorber une substance spécifique à travers un élément de filtre (2a) dans une cartouche (2) quand un liquide passe à travers ledit élément de filtre, ledit liquide étant distribué à travers une entrée (2f) de ladite cartouche et pressurisé afin de passer à travers ledit élément de filtre grâce à de l'air sous pression délivré par ladite entrée, ledit appareil d'extraction comportant :
un support de cartouche (12) destiné à retenir plusieurs rangées de cartouches, chacune desdites rangées de cartouche ayant des nombres N desdites cartouches qui sont dans une première direction dans chacune desdites rangées de cartouches ;
un dispositif de distribution destiné à distribuer ledit liquide dans lesdits nombres N desdites cartouches ;
une rangée de buses d'air dans laquelle des nombres N de buses d'air (41A) sont alignés dans ladite première direction, lesdits nombres N de buses d'air (41A) correspondant aux nombres N desdites cartouches formant une rangée de cartouches, chacune desdites buses d'air comprenant une sortie d'air pour l'évacuation dudit air sous pression, un élément d'étanchéité (86A) prévu autour de ladite sortie d'air et poussé contre ladite entrée de ladite cartouche et une section de régulation (87A) prévue au niveau d'une extrémité inférieure de ladite sortie d'air afin d'empêcher un déplacement de ladite buse d'air dans une direction de diamètre de ladite cartouche ;
une tête de pressurisation (40) destinée à retenir ladite rangée de buses d'air ;
un mécanisme de déplacement de tête de pressurisation destiné à déplacer ladite tête de pressurisation dans une direction de haut en bas entre une position de pressurisation et une position de rétraction, chaque buse d'air étant poussée contre ladite entrée de ladite cartouche par ledit élément d'étanchéité afin d'obturer ladite entrée d'une manière étanche à l'air de façon à délivrer de l'air sous pression à partir de ladite sortie d'air dans ladite position de pressurisation, et ladite buse d'air étant rétractée de ladite cartouche dans ladite position de rétraction ;
un mécanisme de déplacement destiné à déplacer ladite tête de pressurisation ou ledit support de cartouche l'un par rapport à l'autre dans une deuxième direction perpendiculaire à ladite première direction,
**caractérisé en ce que** ladite tête de pressurisation retient chacune desdites buses d'air d'une manière indépendamment mobile dans une direction de haut en bas avec lesdites buses d'air rappelées vers le bas, et ladite tête de pressurisation retient au moins une buse d'air (41B) afin de dépasser dans une position plus basse que les autres buses, et ladite tête de pressurisation comprend :
un corps principal de tête destiné à retenir chacune desdites buses d'air d'une manière indépendamment mobile dans une direction de haut en bas ;
un élément de rappel (82A) destiné à rappeler chacune desdites buses d'air vers le bas par rapport audit corps principal de tête ; et
un élément de blocage (83A) destiné à bloquer lesdites autres buses d'air dans une première position à l'encontre d'une force de rappel dudit élément de rappel, et destiné à bloquer ladite au moins une buse d'air (41B) dans une deuxième de position plus basse que ladite première position à l'encontre de ladite force de rappel.

13. Appareil d'extraction selon la revendication 12, dans lequel ledit liquide distribué dans ladite cartouche est au moins un liquide d'échantillon comprenant une substance spécifique, un liquide de lavage destiné à enlever des impuretés autres que ladite substance spécifique ayant adhéré sur ledit élément de filtre ou un liquide de récupération destiné à séparer et récupérer ladite substance spécifique ayant adhéré sur ledit élément de filtre.
